# EUROPEAN PATENT APPLICATION

(11) **EP 3 324 354 A1**
(43) Date of publication of application: **23.05.2018**
(21) Application number: 17202899.5
(22) Date of filing: 21.11.2017
(51) Int. Cl.: G06Q 20/20, G07G 1/00

(54) **CHECKOUT SYSTEM COMPOSED OF REGISTRATION APPARATUS AND SETTLEMENT APPARATUS**

(30) Priority: 22.11.2016 JP 2016226735
(71) Applicant: Toshiba TEC Kabushiki Kaisha, Tokyo 141-8562 (JP)
(72) Inventor: GOTANDA, Tsuyoshi, Shinagawa-ku,, Tokyo 141-8562 (JP); NAKAJIMA, Takashi, Shinagawa-ku,, Tokyo 141-8562 (JP); SUGITA, Nobuhiro, Shinagawa-ku,, 141-8562 (JP); MIYAZAKI, Jun, Shinagawa-ku,, Tokyo 141-8562 (JP); OTANI, Yuna, Shinagawa-ku,, 141-8562 (JP); GOTOU, Chikashi, Shinagawa-ku,, 141-8562 (JP); SUSAKI, Akiko, Shinagawa-ku,, 141-8562 (JP)
(74) Representative: Takeuchi, Maya

(57) **Abstract**

A checkout system includes a registration apparatus and a settlement apparatus. The registration apparatus generates a settlement data required for a transaction settlement, adds information for specifying an operation mode thereof to the settlement data and transmits the settlement data to which the information is added to a network. The settlement apparatus receives the settlement data transmitted through the network, sets the operation mode thereof to the same operation mode as the registration apparatus based on the information added to the settlement data and performs a settlement processing according to the settlement data in the set operation mode.

## Description

### FIELD

Embodiments described herein relate generally to a checkout system. The checkout system is composed of a registration apparatus and a settlement apparatus separately installed. Such system is generally called a semi-self-checkout system.

### BACKGROUND

As a checkout system oriented for large scale retailers, a semi-self-checkout system is utilized. The semi-self-checkout system is generally composed of a registration apparatus that generates settlement data required for settlement of one transaction and a settlement apparatus that performs a settlement processing based on the settlement data. The registration apparatus is operated by a store clerk and the settlement apparatus is operated by a customer.

The registration apparatus and the settlement apparatus generally have a training function to train a user to learn an input operation. The training function is enabled by setting an operation mode to a training mode in each of the registration apparatus and the settlement apparatus. If a store clerk in a store in which the semi-self-checkout system is installed is trained to learn the input operation of the registration apparatus and the settlement apparatus, the store clerk has to perform a declaration operation for setting the operation mode to the training mode on each of the registration apparatus and the settlement apparatus. It is very troublesome for the store clerk.

To this end, there is provided a checkout system comprising a registration apparatus and a settlement apparatus connected to the registration apparatus through a network, the registration apparatus comprising: a generation module configured to generate a settlement data required for a transaction settlement, an adding module configured to add information for specifying an operation mode of the registration apparatus to the settlement data generated by the generation module, and a transmission module configured to transmit the settlement data, to which the information for specifying the operation mode is added, to the network; and the settlement apparatus comprising: a reception module configured to receive the settlement data transmitted through the network, a setting module configured to set the operation mode of the settlement apparatus to the same operation mode as the registration apparatus based on the information added to the settlement data received by the reception module, and a settlement module configured to perform a settlement processing according to the settlement data in the operation mode set by the setting module.

Preferably, the checkout system comprise a plurality of settlement apparatus for one registration apparatus.

Preferably, the registration apparatus further comprises an instruction module configured to instruct changing the operation mode of the registration apparatus from a default mode to a non-default mode, and a resetting module configured to reset the operation mode of the registration apparatus to the default mode after the transmission module transmits the settlement data in the non-default mode to the settlement apparatus.

Preferably, the registration apparatus further comprises a first instruction module configured to instruct changing the operation mode of the registration apparatus from a default mode to a non-default mode, and a second instruction module configured to instruct changing the operation mode of the registration apparatus from the non-default mode to the default mode,
wherein each time the operation mode is changed, the adding module adds information for specifying the changed operation mode to the settlement data generated by the generation module.

Preferably, the non-default mode is a training mode in which a user learns an input operation on the registration apparatus.

The system may further comprise: a resetting module configured to reset the operation mode of the settlement apparatus to a default mode after the settlement module performs the settlement processing.

The present invention further relates to a registration apparatus which connects, through a network, with a settlement apparatus for performing settlement processing according to a settlement data in a checkout system, comprising: a generation module configured to generate the settlement data required for a transaction settlement; an adding module configured to add information for specifying an operation mode of the registration apparatus to the settlement data generated by the generation module; and a transmission module configured to transmit the settlement data to which the information for specifying the operation mode is added by the adding module to the network.

The device may further comprise: a first instruction module configured to instruct changing the operation mode of the registration apparatus from a default mode to a non-default mode; and a second instruction module configured to instruct changing the operation mode of the registration apparatus from the non-default mode to the default mode, wherein each time the operation mode is changed, the adding module adds information for specifying the changed operation mode to the settlement data generated by the generation module.

Preferably, the registration apparatus further comprises an instruction module configured to instruct changing the operation mode of the registration apparatus from a default mode to a non-default mode, and a resetting module configured to reset the operation mode of the registration apparatus to the default mode after the transmission module transmits the settlement data in the non-default mode to the settlement apparatus.

Preferably, the non-default mode is a training mode in which a user learns an input operation on the registration apparatus.

The present invention also relates to a settlement apparatus which connects, through a network, with a registration apparatus for transmitting, to the network, a settlement data, required for a transaction settlement, to which information for specifying an operation mode thereof is added, in a checkout system, comprising: a reception module configured to receive the settlement data transmitted through the network; a setting module configured to set the operation mode of the settlement apparatus to the same operation mode as the registration apparatus based on the information added to the settlement data received by the reception module; and a settlement module configured to perform settlement processing according to the settlement data in the operation mode set by the setting module.

The device may further comprise: a resetting module configured to reset the operation mode of the settlement apparatus to a default mode after the settlement module performs the settlement processing.

Preferably, the default mode is an operation mode.

The present invention also relates to a method for setting an operation mode of a settlement apparatus connected to a registration apparatus through a network in a checkout system, comprising: generating a settlement data required for a transaction settlement in the registration apparatus; adding information for indicating an operation mode of the registration apparatus to the settlement data; transmitting the settlement data to which the information for indicating the operation mode is added from the registration apparatus to the network; receiving the settlement data transmitted through the network by the settlement apparatus; setting the operation mode of the settlement apparatus to the same operation mode as the registration apparatus based on the information added to the settlement data; and performing a settlement processing according to the settlement data in the set operation mode.

The method may further comprise: changing the operation mode of the registration apparatus from a default mode to a non-default mode, and resetting the operation mode of the registration apparatus to the default mode after transmitting the settlement data in the non-default mode to the settlement apparatus.

The method may further comprise: changing the operation mode of the registration apparatus from a default mode to a non-default mode, changing the operation mode of the registration apparatus from the non-default mode to the default mode, and each time the operation mode is changed, adding information for specifying the changed operation mode to the settlement data generated.

Preferably, the non-default mode is a training mode in which a user learns an input operation on the registration apparatus.

The method may further comprise: resetting the operation mode of the settlement apparatus to a default mode after performing settlement processing.

Preferably, the default mode is an operation mode.

According to the present invention, the settlement module is automatically set to perform a settlement processing according to the settlement data in the operation mode set by the setting module.

According to the present invention, it is not necessary to perform an operation for setting the operation mode to the training mode for each of the registration apparatus and the settlement apparatus. Therefore, the trainee can reduce the number of operations.

According to the present invention, it is possible to reduce required steps as it is not required for the trainee to perform an operation of declaring the operation completion in the training mode for each of the registration apparatus and the settlement apparatus.

### DESCRIPTION OF THE DRAWINGS

FIG. 1 is a schematic diagram illustrating a checkout system according to an embodiment;
FIG. 2 is a block diagram illustrating a main circuit configuration of a registration apparatus and a settlement apparatus in the checkout system shown in FIG. 1;
FIG. 3 is a schematic diagram illustrating a main memory area formed in a RAM of the registration apparatus;
FIG. 4 is a schematic diagram illustrating a main memory area formed in a RAM of the settlement apparatus;
FIG. 5 is a flowchart illustrating a procedure of an information processing performed by a CPU of the registration apparatus;
FIG. 6 is a flowchart illustrating a procedure of an information processing performed by the CPU of the registration apparatus;
FIG. 7 is a flowchart illustrating a procedure of a main processing performed by a CPU of the settlement apparatus;
FIG. 8 is a flowchart illustrating a procedure of a reception interruption processing performed by the CPU of the settlement apparatus;
FIG. 9 is a view illustrating an example of a registration detail image displayed on a touch panel if the registration apparatus is operated in a registration mode;
FIG. 10 is a view illustrating an example of the registration detail image displayed on the touch panel if the registration apparatus is operated in a training mode;
FIG. 11 is a view illustrating an example of a payment image displayed on the touch panel if the registration apparatus is operated in the training mode;
FIG. 12 is a view illustrating an example of a guide image displayed on the touch panel if the registration apparatus is operated in the training mode;
FIG. 13 is a view illustrating an example of a payment selection image displayed on the touch panel if the settlement apparatus is operated in a training mode;
FIG. 14 is a view illustrating an example of a settlement image displayed on the touch panel if the settlement device is operated in the training mode;
FIG. 15 is a view illustrating an example of a virtual payment image displayed on the touch panel if the settlement apparatus is operated in the training mode;
FIG. 16 is a flowchart illustrating a procedure of an information processing in partial performed by a CPU of a registration apparatus according to a second embodiment;
FIG. 17 is a view illustrating an example of a guide image displayed on a touch panel when the registration apparatus is operated in a training mode according to the second embodiment; and
FIG. 18 is a flowchart illustrating a procedure of a main processing in partial performed by a CPU of a settlement apparatus according to the second embodiment.

### DETAILED DESCRIPTION

According to an embodiment, a checkout system includes a registration apparatus and a settlement apparatus connected to the registration apparatus through a network. The registration apparatus includes a generation module, an adding module, and a transmission module. The generation module generates a settlement data required for a transaction settlement. The adding module adds information for specifying an operation mode of the registration apparatus to the settlement data generated by the generation module. The transmission module transmits the settlement data to which the information for specifying the operation mode is added to the network. The settlement apparatus includes a reception module, a setting module, and a settlement module. The reception module receives the settlement data transmitted through the network. The setting module sets the operation mode of the settlement apparatus to the same operation mode as the registration apparatus based on the information added to the settlement data received by the reception module. The settlement module executes a settlement processing according to the settlement data in the operation mode set by the setting module.

Hereinafter, embodiments of a checkout system are described with reference to the accompanying drawings. In the embodiments, a settlement apparatus receiving data from a registration apparatus can set an operation mode to an operation mode of the registration apparatus based on the received data.

### (First Embodiment)

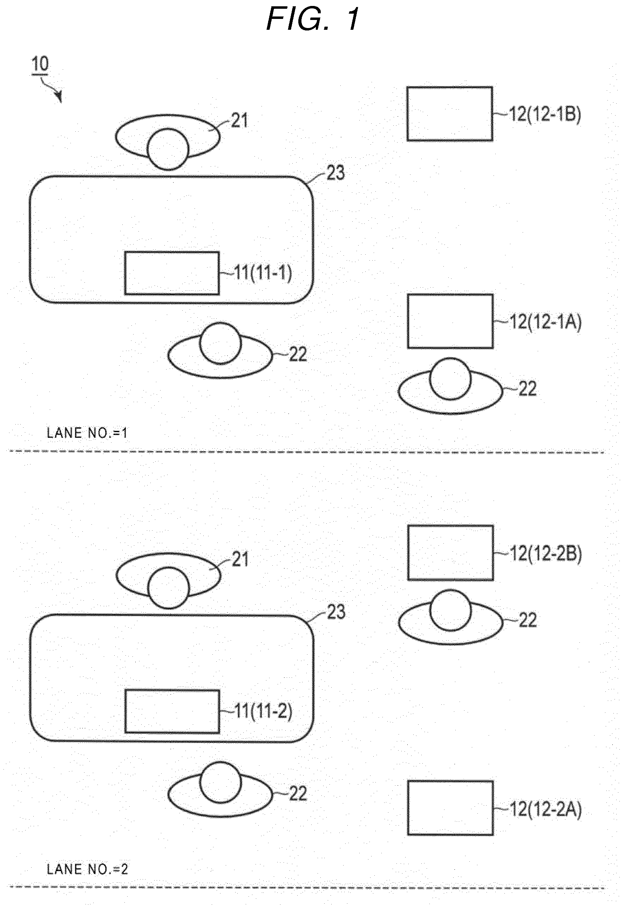

FIG. 1 is a schematic diagram illustrating a checkout system 10 according to the first embodiment. The checkout system 10 includes a plurality of registration apparatuses 11 and settlement apparatuses 12. The number of settlement apparatuses 12 is larger than the number of registration apparatuses 11.

The registration apparatus 11 has a registration mode, i.e., a default operation mode. In the registration mode, the registration apparatus 11 can perform operations such as a sales registration of a commodity, a generation of settlement data, and a transmission of the settlement data. The sales registration of the commodity is to register sales data of the commodity in a memory based on input data. For example, if a bar-code attached to the commodity is scanned to input a commodity code, the registration apparatus 11 registers the sales data such as the number of sales quantities and a sales amount of the commodity in the memory in association with the commodity code. If the sales of all commodities for one transaction are completely registered, the registration apparatus 11 generates the settlement data required for the settlement for the transaction based on the sales data of each commodity registered in the memory. The settlement data includes a commodity code, a commodity name, a unit price, number of sales-commodities, and the total amount of the commodities. The registration apparatus 11 transmits the settlement data to the settlement apparatus 12.

The registration apparatus 11 has a training mode, i.e., a non-default operation mode. The training mode is to train a user to learn an input operation. In the training mode, similarly to the registration mode, the registration apparatus 11 can perform operations such as the sales registration of the commodity, the generation of the settlement data, and the transmission of the settlement data.

The settlement apparatus 12 has a registration mode, i.e., a default operation mode. In the registration mode, the settlement apparatus 12 can perform operations such as a settlement processing, an issuance of a receipt, a registration of the sales data as a sales turnover. The settlement processing is to receive an input of payment for settlement and to settle a sales transaction of the commodity, based on payment data and the settlement data. The payment data includes a payment method such as cash, a credit card, and an electronic money. The settlement apparatus 12 issues a receipt on which information relating to the settled sales transaction is written. The receipt may be issued in a paper form or may be issued in an electronic form. The settlement apparatus 12 registers the number of quantities and the amount of the sold commodities in a memory device as the sales data. The memory device may be included in the settlement apparatus 12, or may be included in a server functioning as a master machine of the settlement apparatus 12.

The settlement apparatus 12 has a training mode, i.e., a non-default operation mode. The training mode is to train a user to learn an input operation. In the training mode, similarly to the registration mode, the settlement apparatus 12 can perform operations such as the settlement processing and the issuance of the receipt. However, a commercial transaction settled in the training mode is a virtual transaction. Accordingly, the settlement apparatus 12 does not register the sales data as an actual sales turnover.

The registration apparatus 11 and the settlement apparatus 12 are installed at each checkout lane in a store. The number of checkout lanes is arbitrary determined. The number of registration apparatuses 11 provided at one checkout lane is generally one. The number of settlement apparatuses 12 is freely determined. FIG. 1 is a view illustrating an example in which one registration apparatus 11 and two settlement apparatuses 12 are provided at two checkout lanes, respectively.

In FIG. 1, the registration apparatus 11 is mounted on a work table 23. The work table 23 has a rectangular top plate. A plurality of work tables 23 are disposed such that longitudinal directions of the top plates are substantially parallel to each other. A working space for a store clerk 21 and a passage for a shopper 22 are alternately formed between work tables 23.

Each unique number is allocated to each checkout lane. In FIG. 1, the lane number "1" is allocated to the checkout lane at an upper side in the drawing, and the lane number "2" is allocated to the checkout lane at a lower side in the drawing. One registration apparatus 11 (11-1) and two settlement apparatuses 12 (12-1Aand 12-1 B) are disposed in the checkout lane of the lane number "1". One registration apparatus 11 (11-2) and two settlement apparatuses 12 (12-2A and 12-2B) are also disposed in the checkout lane of the lane number "2".

The registration apparatus 11 cooperates with the two settlement apparatuses 12 disposed in the same checkout lane. The settlement data is transmitted to one of the two settlement apparatuses 12 cooperating therewith from the registration apparatus 11. The settlement apparatus 12 to which the settlement data is transmitted is arbitrary determined. As other examples, the settlement data may be transmitted to each of the two settlement apparatuses 12, simultaneously.

The checkout system 10 in the present embodiment is of a semi-self-checkout system. In this system, the store clerk 21 serves as an operator on the registration apparatus 11, and the shopper (person for settlement) 22 serves as an operator on the settlement apparatus 12.

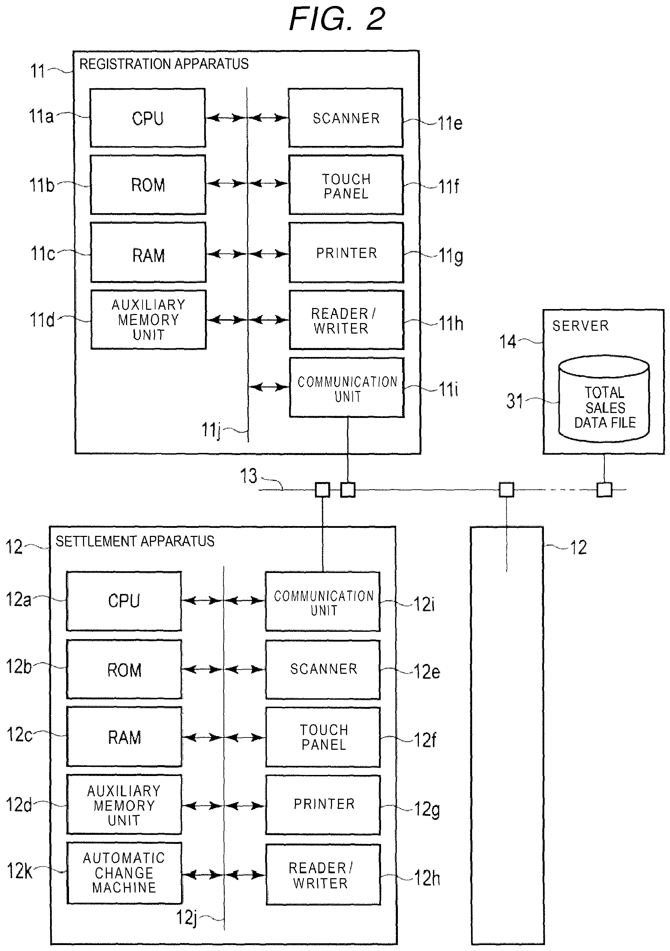

FIG. 2 is a block diagram illustrating a main circuit configuration of the registration apparatus 11 and the settlement apparatus 12. Both the registration apparatus 11 and the settlement apparatus 12 in each checkout lane are connected through a LAN (Local Area Network) 13 serving as an in-store network. A server 14 is also connected to the registration apparatus 11 and the settlement apparatus 12 through the LAN 13.

The registration apparatus 11 and the settlement apparatus 12 perform reception/transmission of data via the LAN 13. The in-house network may include another communication network such as the Internet and a wireless LAN instead of the LAN. The information such as data relating to the settlement may be transmitted between the registration apparatus 11 and the settlement apparatus 12 via the server 14. The registration apparatus 11 and the settlement apparatus 12 provided at each checkout lane may be connected with a dedicated communication network for each checkout lane, and the registration apparatuses 11 provided at the checkout lanes may be connected to each other via another communication network.

The registration apparatus 11 includes a CPU (Central Processing Unit) 11 a, a ROM (Read Only Memory) 11 b, a RAM (Random Access Memory) 11c, an auxiliary memory unit 11 d, a scanner 11e, a touch panel 11f, a printer 11 g, a reader/writer 11 h, a communication unit 11i, and a transmission system 11j.

The CPU 11a is connected to the ROM 11 b, the RAM 11c, and the auxiliary memory unit 11 d via the transmission system 11j to constitute a computer. The CPU 11a corresponds to a central part of the computer described above. The CPU 11a controls each unit of the computer to realize various functions of the registration apparatus 11 according to an operating system, middleware, and an application program stored in the ROM 11 b and the RAM 11c.

The ROM 11 b acts as a main memory of the computer. The ROM 11 b stores the operating system. In some cases, the ROM 11 b also stores the middleware or the application program. Further, in some cases, the ROM 11 b stores data to which the CPU 11a refers to perform various processing.

The RAM 11c also acts as a main memory of the computer. The RAM 11c stores data to which the CPU 11a refers to perform various processing. The RAM 11c is also used as a so-called work area for storing data to be temporarily used by the CPU 11a while performing various processing.

The auxiliary memory unit 11 d acts as an auxiliary memory of the computer. The auxiliary memory unit 11 d stores data used for the CPU 11a to perform various processing or data generated through the processing by the CPU 11a. The auxiliary memory unit 11 d includes, for example, an EEPROM (Electric Erasable Programmable Read-Only Memory), an HDD (Hard Disc Drive), and an SSD (Solid State Drive). The application program stored in the ROM 11 b or the auxiliary memory unit 11 d includes a control program, described relating to the information processing, which is executed by the registration apparatus 11.

The scanner 11e reads a barcode attached to a commodity to acquire a commodity code of the commodity.

The touch panel 11f includes a display device and a touch sensor. The touch panels 11f include one for a clerk and one for a customer. The touch panel for store clerk 11f is disposed on the work table 23 such that a display screen is oriented to the working space where the store clerk 21 stands. The touch panel for customer 11f is also disposed on the work table 23 such that the display screen is oriented to the passage where the shopper 22 stands.

The printer 11 g prints a settlement information with various character strings or images on a paper to issue the paper as a receipt.

The reader/writer 11h reads data recorded in a storage medium, such as an IC (Integrated Circuit) chip of a card, i.e., a payment medium, and writes data on the storage medium. In addition to a settlement card such as a credit card, a debit card, an electronic money card, and a prepaid card, the card includes various cards, e.g., membership card, point card and the like, for recording information relating to the settlement processing. In addition to the various types of cards described above, the IC chip is also included in an information terminal such as a smartphone.

The communication unit 11i is connected to the LAN 13. The communication unit 11i performs data communication with the plurality of settlement apparatuses 12 which are connected through the LAN 13 and are cooperated with one another. The communication unit 11i can also perform data communication with the other registration apparatus 11 or the other settlement apparatus 12 via the LAN 13.

The transmission system 11j sends data received/transmitted among the CPU 11a, the ROM 11 b, the RAM 11c, the auxiliary memory unit 11 d, the scanner 11e, the touch panel 11 f, the printer 11 g, the reader/writer 11 h, and the communication unit 11i. The transmission system 11j can employ a well-known system including various buses such as a system bus and various interface circuits for connecting these buses and each unit described above.

As a hardware of the registration apparatus 11 as described above, for example, an existing POS terminal can be employed.

The settlement apparatus 12 includes a CPU 12a, a ROM 12b, a RAM 12c, an auxiliary memory unit 12d, a scanner 12e, a touch panel 12f, a printer 12g, a reader/writer 12h, a communication unit 12i, and a transmission system 12j. The settlement apparatus 12 includes an automatic change machine 12k. The automatic change machine 12k receives cash (coins and bills), i.e., payment medium, used for transaction settlement. The automatic change machine 12k discharges cash (coins and bills) as a change.

The CPU 12a, the ROM 12b, the RAM 12c, the auxiliary memory unit 12d, the scanner 12e, the touch panel 12f, the printer 12g, the reader/writer 12h, the communication unit 12i, and the transmission system 12j have functions the same as those of the registration apparatus 11. The CPU 12a is connected to the ROM 12b, the RAM 12c, and the auxiliary memory unit 12d via the transmission system 12j to constitute a computer. The CPU 12a controls each unit of the computer to realize various operations as the settlement apparatus 12 according to the operating system, the middleware, and the application program stored in the ROM 12b and the RAM 12c. The application program stored in the ROM 12b or the auxiliary memory unit 12d includes a control program, described in relation to the information processing, which is executed by the settlement apparatus 12. As a hardware of the settlement apparatus 12, for example, a POS terminal corresponding to an existing self-checkout system can be utilized.

The server 14 stores commodity database in which commodity information such as a commodity name and a unit price is set in association with a commodity code of each commodity in the memory device. For example, the memory device is the HDD or the SSD and may be incorporated in the server 14, or externally attached to the server 14.

The server 14 stores a total sales data file 31 in the memory device.

The total sales data file 31 is an area in which data of each purchased commodity whose sales are registered by each registration apparatus 11 is collected for each classification item such as the commodity code, the checkout lane, the transaction date, the transaction time zone. The data stored in the total sales data file 31 is analyzed in a store to have management data such as the total sales in the store, the number of commodities in stock, and waste losses.

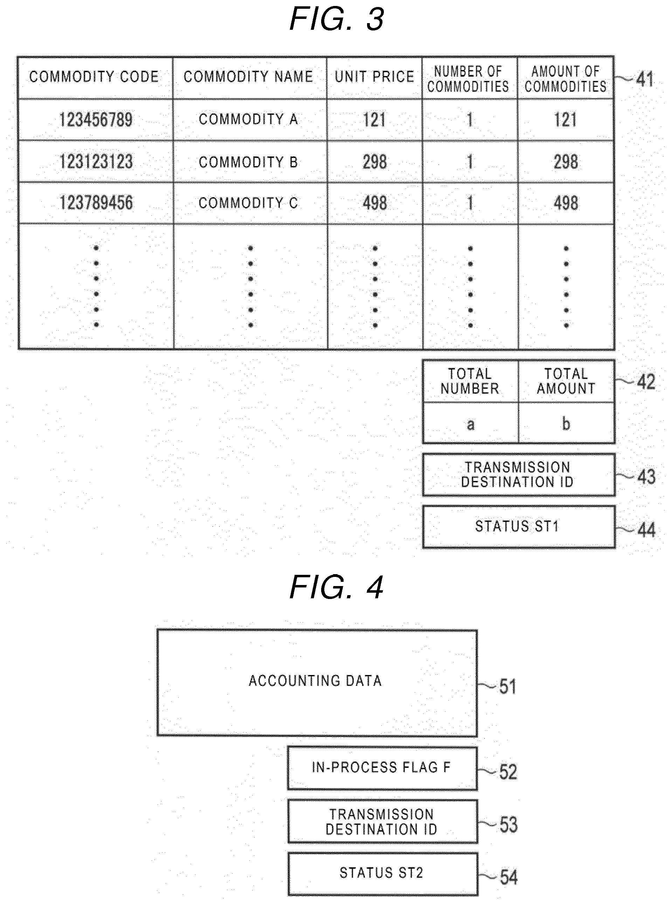

FIG. 3 is a schematic diagram illustrating a main memory area formed in the RAM 11c of the registration apparatus 11. In FIG. 3, a memory area 41 is used to store a plurality of records including each data of the commodity code, the commodity name, the unit price, and the number of quantities and the amount of the commodities. The commodity code is a unique code for individually identifying each commodity. The commodity code represented by a barcode is assigned to each commodity, for example. The commodity name and the unit price in one record are the name and the price of the commodity specified by the commodity code in the same record. The number of quantities and the amount in one record are the sales data of the commodity specified by the commodity code in the same record.

If the commodity code is input in the registration apparatus 11, the CPU 11a inquires the server 14 the commodity information, using the commodity code. Upon receiving this inquiry, the server 14 accesses the commodity database to read the commodity information associated with the commodity code from the commodity database, and notifies the registration apparatus 11 of the commodity information via the LAN 13. The CPU 11a of the registration apparatus 11 prepares the above-described record, based on the commodity information notified from the server 14, and stores (registers) the record in the memory area 41. Hereinafter, the memory area 41 is referred to as a "sales registration table 41".

A memory area 42 is used to store the total number of quantities and the total amount of sales. The total number of sales quantities is the sum of the number of sales quantities in the records stored (registered) in the sales registration table 41, and the total amount of sales is the sum of the sales amounts in the same records. Hereinafter, the memory area 42 is referred to as a total table 42.

A memory area 43 is used to store a transmission destination ID for specifying the settlement apparatus 12, i.e., a transmission destination of the settlement data. The registration apparatus 11 transmits the settlement data generated based on the information of the records stored (registered) in the sales registration table 41, to the settlement apparatus 12 via the LAN 13. In this case, the registration apparatus 11 transmits the settlement data via the LAN 13 to one of the settlement apparatuses 12 identified with the transmission destination ID stored in the memory area 43. Hereinafter, the memory area 43 is referred to as a transmission destination memory 43.

A memory area 44 is used to store status information ST1 indicating an operation mode of the registration apparatus 11. As described above, the registration apparatus 11 has the registration mode, i.e., the default operation mode, and has the training mode, i.e., the non-default operation mode. In the present embodiment, the status information ST1 is set to "0" in the registration mode, and is set to "9" in the training mode. Hereinafter, the memory area 44 is referred to as a status memory 44.

The operation mode the registration apparatus 11 has is not limited to the registration mode and the training mode. The operation mode may include a management mode, an inspection mode, an adjustment mode, a setting mode, and a commodity-return mode which are all well known.

FIG. 4 is a schematic diagram illustrating a main memory areas formed in the RAM 12c of the settlement apparatus 12. In FIG. 4, a memory area 51 is used to store the settlement data received from the registration apparatus 11. Hereinafter, the memory area 51 is referred to as a settlement data memory 51.

A memory area 52 is used to store an in-process flag F. The in-process flag F is information for identifying whether or not the settlement processing based on the settlement data is performed. In the present embodiment, the in-process flag F is reset to "0" if the settlement processing is not performed, and is set to "1" if the settlement processing is performed. Hereinafter, the memory area 52 is referred to as a flag memory 52.

A memory area 53 is used to store a transmission destination ID for specifying the other settlement apparatus 12, i.e., the transmission destination of the settlement data. If the settlement apparatus 12 receives other settlement data while the settlement processing is performed, the settlement apparatus 12 transmits the settlement data via the LAN 13 to the other settlement apparatus 12 identified, using the transmission destination ID stored in the memory area 53. Hereinafter, the memory area 53 is referred to as a transmission destination memory 53.

The transmission destination ID is not stored in the transmission destination memory 53 in the settlement apparatus 12 to which other settlement data is finally transmitted. Alternatively, information indicating that the transmission destination ID is not yet set is stored in the transmission destination memory 53.

A memory area 54 is used to store status information ST2 indicating the operation mode of the settlement apparatus 12. As described above, the settlement apparatus 12 has the registration mode, i.e., the default operation mode, and has the training mode, i.e., the non-default operation mode. In the present embodiment, the status information ST2 is set to "0" in the registration mode, and is set to "9" in the training mode. Hereinafter, the memory area 54 is referred to as a status memory 54.

The operation mode the settlement apparatus 12 has is not limited to the registration mode and the training mode. The operation mode may include the management mode, the inspection mode, the adjustment mode, the setting mode, and the commodity-return mode which are well known.

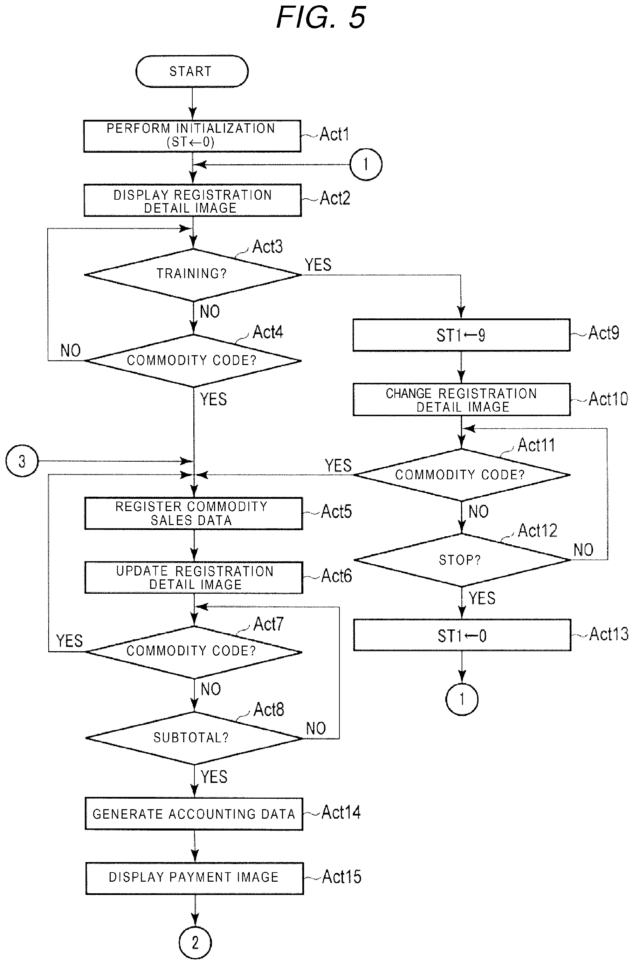

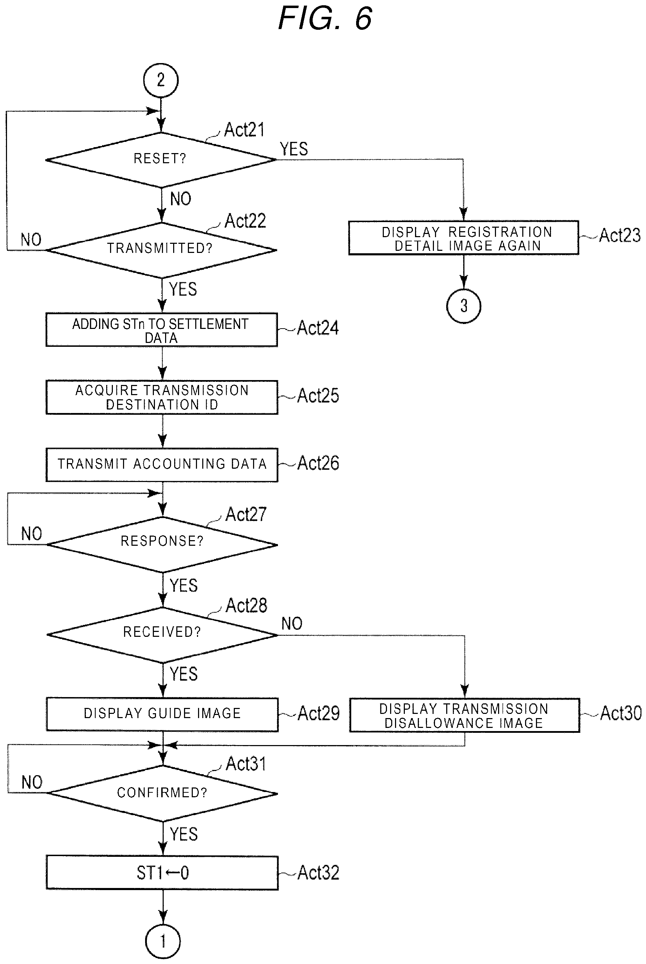

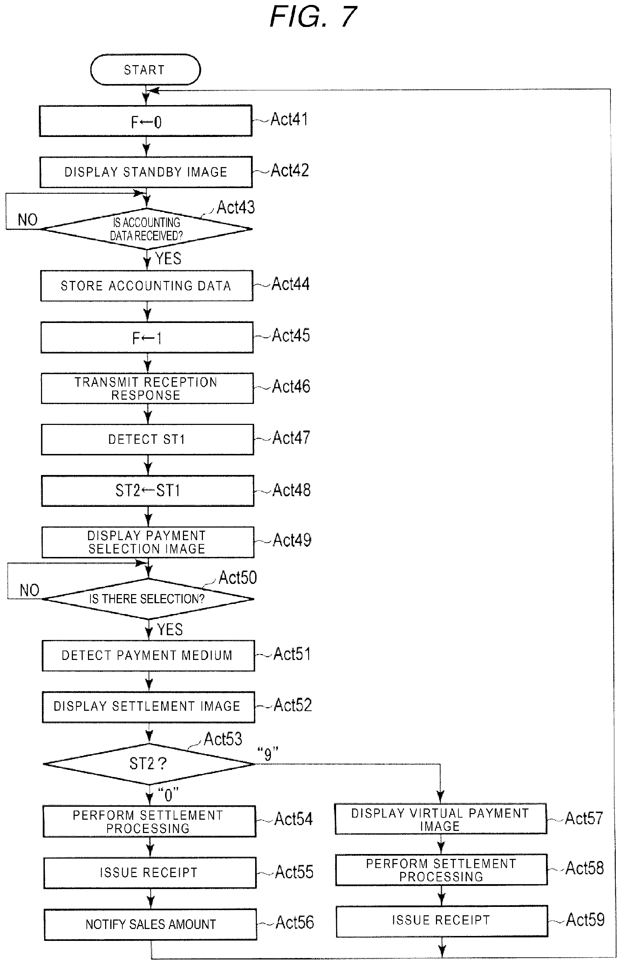

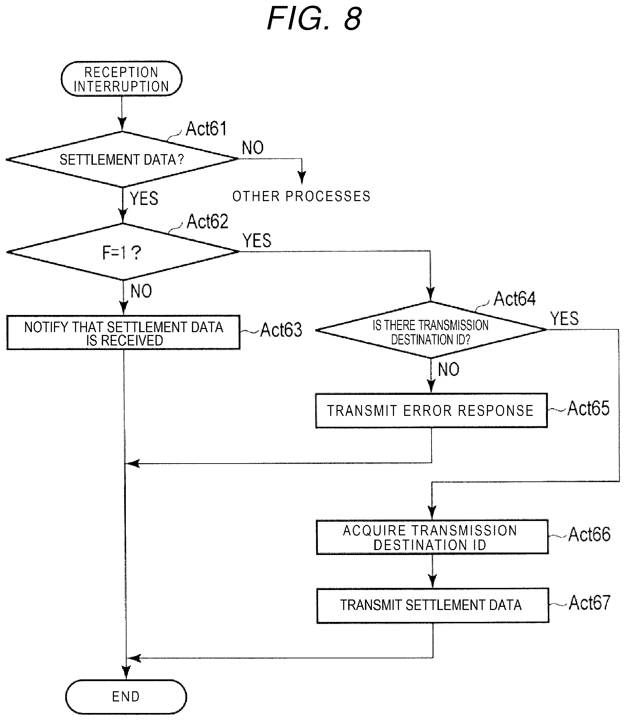

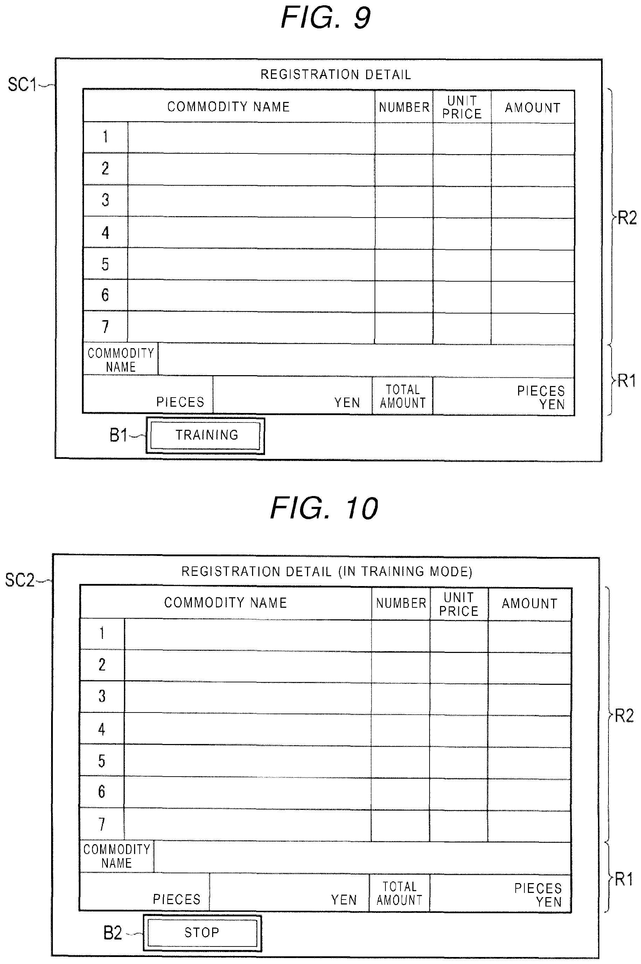

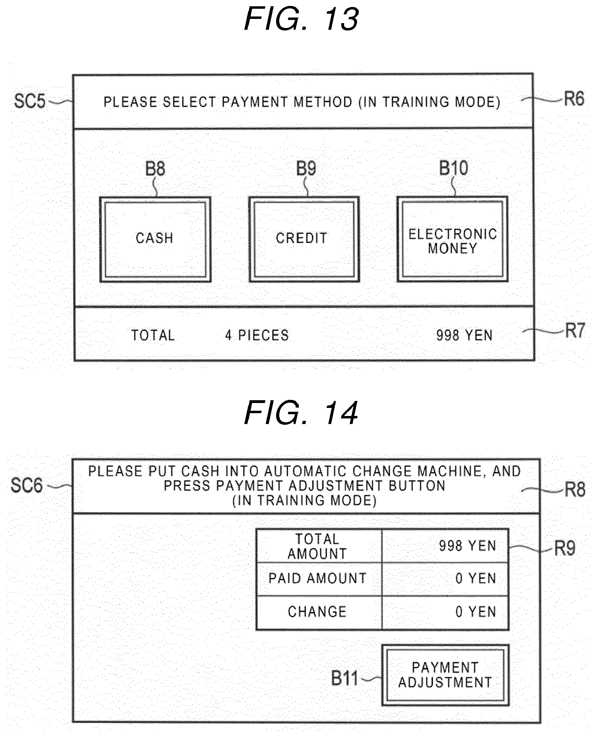

FIGS. 5 and 6 are flowcharts illustrating a procedure of the information processing performed by the CPU 11 a of the registration apparatus 11. The information processing is performed in accordance with the control program stored in the ROM 11 b or the auxiliary memory unit 11 d. FIG. 7 is a flowchart illustrating a procedure of main processing performed by the CPU 12a of the settlement apparatus 12, and FIG. 8 is a flowchart illustrating a procedure of reception interruption processing performed by the CPU 12a. The main processing and the reception interruption processing are performed in accordance with the control program stored in the ROM 12b or the auxiliary memory unit 12d. FIGS. 9 to 12 illustrate each example of images displayed on the touch panel 11f of the registration apparatus 11, and FIGS. 13 to 15 illustrate each example of images displayed on the touch panel 12f of the settlement apparatus 12. Hereinafter, an operation of the checkout system 10 is described with reference to the drawings. The contents of processing and images described below are merely examples, and various processing and images capable of achieving similar results can be appropriately applied.

First, an operation of the registration apparatus 11 is described.

If the registration apparatus 11 is activated in the default registration mode, the CPU 11 a starts the information processing illustrated in the flowchart in FIG 5. First, the CPU 11a performs an initialization in Act 1. Through the initialization, the sales registration table 41 and the total table 42 are cleared. Status information ST1 in the status memory 44 is set to "0".

Next, the CPU 11a displays a first registration detail image SC1 (refer to FIG. 9) on an area of a screen of the touch panel 11f, in Act 2.

The first registration detail image SC1 indicates the contents of the sales registration table 41 and the total table 42, and the store clerk 21 confirms an execution state of the registration processing. FIG. 9 illustrates an example of the first registration detail image SC1, at the time the status information ST1 is set to "0", that is, the registration apparatus is operated in the registration mode. The first registration detail image SC1 includes display areas R1 and R2 and a button B1. In the display area R1, the commodity name, the number of quantities, and the unit price, all of which relate to the purchased commodity newly registered, and the total number of quantities and the total amount of the purchased commodity after the commodity is registered are displayed. In the display area R2, a list of the commodity name, the number of sales quantities, the unit price, and the amount, all of which relate to the purchased commodity registered earlier than the commodity displayed in the first registration detail image SC1 is displayed. The button B1 is operated by a user to instruct that the operation mode of the registration apparatus 11 is switched to the training mode. In the following description, the button B1 is referred to as a "training button".

Although not illustrated in the drawing, the CPU 11 a displays various function buttons such as "commodity" buttons for specifying the commodity and a "subtotal" button operated by the store clerk at outside of an area for displaying the first registration detail image SC1 on the screen of the touch panel 11 f.

The store clerk 21 who confirms the first registration detail image SC1 operates, for example, the scanner 11e or the "commodity" button, to sequentially input the commodity code of the commodity purchased by the shopper 22. If the commodity codes of all purchased commodities are completely input, the store clerk 21 touches the "subtotal" button.

Referring to FIG. 5, the description is continued.

The CPU 11a displaying the first registration detail image SC1 confirms whether or not the "training" button B1 is input in Act 3. If the "training" button B1 is not touched (NO in Act 3), the CPU 11a confirms whether or not the commodity code is input in Act 4. If the commodity code is not input (NO in Act 4), the CPU 11a returns to the processing in Act 3. Therefore, the CPU 11a is in a standby state until the "training" button B1 is touched or the commodity code is input through the processing in Act 3 and Act 4.

In the standby state in Act 3 or Act 4, if the commodity code is input via the scanner 11e or the "commodity" button (YES in Act 4), the CPU 11a registers commodity sales data in Act 5. The CPU 11a acquires the commodity information such as the commodity name and the unit price stored in the commodity database associated with the input commodity code, and multiplies the unit price by the number of sales quantities to calculate the sales amount. The CPU 11 a prepares a record of the commodity sales data including the commodity code, the commodity name, the unit price, the number of sales quantities, and the sales amount, and registers the record in the sales registration table 41. The CPU 11 a adds the number of sales quantities and the sales amount to the total table 42. If the commodity sales data is completely registered in this way, the CPU 11 a updates the first registration detail image SC1 in Act 6 according to the contents of the sales registration table 41 and the total table 42.

If the first registration detail image SC1 is updated, the CPU 11a confirms whether or not the subsequent commodity code is input in Act 7. If the commodity code is not input (NO in Act 7), the CPU 11 a confirms whether or not the "subtotal" button is touched in Act 8. If the "subtotal" button is not touched (NO in Act 8), the CPU 11 a returns to the processing in Act 7. Therefore, the CPU 11 a is in a standby state until the commodity code is input or the "subtotal" button is touched through the processing in Act 7 and Act 8. In the standby state, the CPU 11 a confirms the occurrence of other events such as other operations performed, and may proceed to processing responding to the occurring event.

On the other hand, in the standby state in Act 3 and Act 4, if the "training" button B1 is touched (YES in Act 3), the CPU 11a sets the status information ST1 in the status memory 44 to "9" in Act 9. In Act 10, the CPU 11a changes the first registration detail image SC1 at the time the registration mode is set to a second registration detail image SC2 (refer to FIG. 10) at the time the training mode is set.

FIG. 10 illustrates an example of the second registration detail image SC2 if the status information ST1 is set to "9", that is, if the registration apparatus is operated in the training mode. The second registration detail image SC2 displays a "stop" button B2 instead of the "training" button B1 of the first registration detail image SC1. Further, the second registration detail image SC2 is realized by adding a comment "(training mode)" notifying a trainee of the training mode to the first registration detail image SC1. The "stop" button B2 is operated by the trainee to instruct stopping of the training mode.

A computer including the CPU 11 a executes the processing in Act 2, Act 3, and Act 9 in cooperation with the touch panel 11f, and thus realizes an instruction unit for instructing that the operation mode of the registration apparatus 11 is changed from the default mode to the non-default mode.

The trainee, e.g., store clerk, who performs training on the registration apparatus 11 touches the "training" button B1 on the first registration detail image SC1. The second registration detail image SC2 is displayed on the touch panel 11f. Accordingly, the trainee sequentially inputs the commodity codes of the commodities prepared for training. If the commodity codes of all commodities for training are completely input, the trainee touches the "subtotal" button. However, if the trainee determines to stop training for some reason before the training starts, the trainee touches the "stop" button B2.

If the second registration detail image SC2 is displayed on the touch panel 11f, the CPU 11 a confirms whether or not the commodity code is input in Act 11. If the commodity code is not input (NO in Act 11), the CPU 11 a confirms whether or not the "stop" button B2 is touched in Act 12. If the "stop" button B2 is not touched (NO in Act 12), the CPU 11 a returns to the processing in Act 11. Therefore, the CPU 11 a is in a standby state until the commodity code is input or the "stop" button B2 is touched through the processing in Act 11 and Act 12. In the standby state, the CPU 11 a confirms occurrence of other events such as other operations performed, and may proceed to processing responding to the occurring event.

In the standby state in Act 11 and Act 12, if the "stop" button B2 is touched (YES in Act 12), the CPU 11a sets the status information ST1 in the status memory 44 to "0" in Act 13. The CPU 11 a returns to the processing in Act 2. Therefore, the CPU 11 a resets the screen displayed on the touch panel 11f from the second registration detail image SC2 to the first registration detail image SC1. The CPU 11a returns to the standby state in Act 3 or Act 4 again.

In the standby state Act 11 and Act 12, if the commodity code is input via the scanner 11e or the "commodity" button (YES in Act 11), the CPU 11a proceeds to the processing in Act 5. The CPU 11a registers the commodity sales data, and updates the second registration detail image SC2. Thereafter, the CPU 11 a enters the standby state in Act 7 and Act 8.

In the standby state in Act 7 and Act 8, if the commodity code is input (YES in Act 7), the CPU 11a returns to the processing in Act 5. The CPU 11a repeats the subsequent processing in the same manner as described above. Therefore, each time the commodity code is input, the CPU 11a registers the commodity sales data, and updates the first registration detail image SC1 or the second registration detail image SC2.

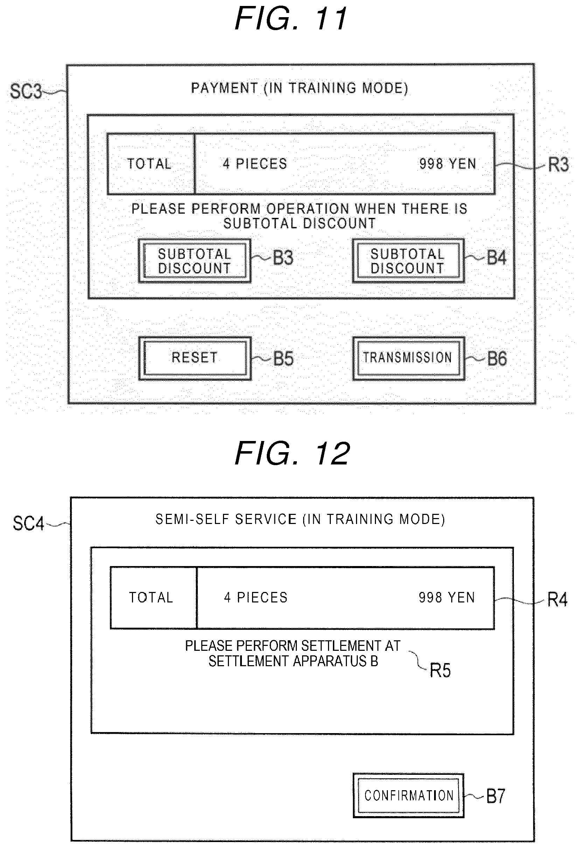

In the standby state in Act 7 and Act 8, if the "subtotal" button is touched (YES in Act 8), the CPU 11a generates the settlement data in Act 14, based on the data in the sales registration table 41 and the total table 42. The CPU 11a displays a payment image SC3 (refer to FIG. 11) on an area of the screen of the touch panel 11f, in Act 15.

The payment image SC3 is provided for the store clerk 21 that the store clerk confirms whether or not a payment processing for the registered commodity can be started. An example of the payment image SC3 is illustrated in FIG. 10. FIG. 10 illustrates the payment image SC3 in a case in which the registration apparatus 11 is operated in the training mode. The payment image in a case in which the registration apparatus 11 is operated in the registration mode is realized in such a manner that the comment "(training mode)" notifying the trainee of the training mode is deleted from the payment image SC3 in FIG. 10.

The payment image SC3 includes a display area R3 and buttons B3, B4, B5, and B6. In the display area R3, the total number of quantities and the total amount in the total table 42 are displayed. The buttons B3 and B4 are provided for an operator (the store clerk 21 or the trainee) to instruct that a discount or a cut-price is available from the total amount. The button B5 is provided for the operator to instruct that the screen of the touch panel 11f displays the first registration detail image SC1 or the second registration detail image SC2 again. The button B6 is provided for the operator to instruct the transmission of the settlement data.

The computer including the CPU 11 a which performs the processing in Act 14 realizes a generation unit for generating the settlement data required for the transaction settlement.

The operator confirming the payment image SC3 touches a "return" button B5 if the operator performs an additional registration of the commodity. If the operator proceeds to the payment processing for the registered commodity, the operator touches a "transmission" button B6.

If the payment image SC3 is displayed, the CPU 11 a confirms whether or not the "return" button B5 is touched in Act 21 in FIG. 6. If the "return" button B5 is not touched (NO in Act 21), the CPU 11 a confirms whether or not the "transmission" button B6 is touched, in Act 22. If the "transmission" button B6 is not touched (NO in Act 22), the CPU 11 a returns to the processing in Act 21. Therefore, the CPU 11 a is in a standby state until the "return" button B5 is touched or the "transmission" button B6 is touched through the processing in Act 21 and Act 22. In the standby state, the CPU 11 a confirms the occurrence of other events such as other operations performed, and may proceed to a processing responding to the occurring events. For example, if one of the buttons B3 and B4 is touched by the operator, the CPU 11 a changes the total amount included in the settlement data in accordance with the instruction made thereafter by the operator.

In the standby state in Act 21 and Act 22, if the "return" button B5 is touched (YES in Act 21), in Act 23, the CPU 11 a displays one of the first registration detail image SC1 and the second registration detail image SC2 which is displayed immediately before on a partial area of the screen of the touch panel 11f again. Thereafter, the CPU 11a returns to the processing in Act 5 in FIG. 5, and repeats the subsequent processing in the same manner as described above.

In the standby state in Act 21 and Act 22, if the "transmission" button B6 is touched (YES in Act 22), in Act 24, the CPU 11 a adds the status information ST1 in the status memory 44 to the settlement data generated through the processing in Act 14.

The computer including the CPU 11 a performs the processing in Act 24, to realize a supplement unit for supplying or adding the information (status information ST1) for specifying the operation mode of the registration apparatus 11 to the settlement data.

In Act 25, the CPU 11 a acquires the transmission destination ID from the transmission destination memory 43. In Act 26, the CPU 11a transmits the settlement data to which the status information ST1 is added, to one settlement apparatus 12 identified with the transmission destination ID.

Specifically, the CPU 11a sets a communication address assigned to one settlement apparatus 12 identified with the transmission destination ID as a transmission destination address and a communication address assigned to the registration apparatus (own apparatus) as a transmission source address, and then controls the communication unit 11i to transmit the settlement data to the LAN 13. With this control, information including the settlement data to which the status information ST1 is added is transmitted to the LAN 13. This information is received by the one settlement apparatus 12 identified with the transmission destination ID.

The computer including the CPU 11a performs the processing in Act 25 and Act 26 in cooperation with the communication unit 11i to realize a transmission unit for transmitting the settlement data to which the information (status information ST1) for specifying the operation mode of the registration apparatus 11 is added, to the network (LAN 13).

If the transmission of the settlement data is controlled in this way, in Act 27, the CPU 11 a waits for a response signal from the settlement apparatus 12. As is described later, a response signal for reception or a response signal for error is returned from one of the settlement apparatuses 12 receiving the settlement data (settlement apparatus receiving the settlement data transmitted from the registration apparatus 11 or one settlement apparatus receiving the settlement data transmitted from the other settlement apparatus). If the response signal is received via the communication unit 11i (YES in Act 27), the CPU 11 a determines whether the response signal is the response signal for reception or the response signal for error in Act 28.

If the response signal is the signal for reception (YES in Act 28), the CPU 11a displays a guide image SC4 (refer to FIG. 12) on an area of the screen of the touch panel 11f in Act 29.

The guide image SC 4 is provided for the operator to confirm the settlement apparatus 12, i.e., the transmission destination of the settlement data. An example of the guide image SC4 is illustrated in FIG. 12. FIG. 12 a view illustrating the guide image SC4 at the time the registration apparatus 11 is operated in the training mode. The guide image at the time the registration apparatus 11 is operated in the registration mode is realized in such a manner that the comment "(training mode)" notifying the trainee of the training mode is deleted from the guide image SC4 in FIG. 12.

The guide image SC4 includes display areas R4 and R5, and a button B7. The display area R4 displays the total number of quantities and the total amount in the total table 32a. The display area R5 displays a message for informing the operator of the settlement apparatus 12, i.e., the transmission destination of the settlement data. For example, the message may be "please use settlement apparatus B for settlement". The content of the message is not particularly limited. For example, the message may be "your settlement data is transmitted to settlement apparatus B", "the settlement apparatus B" or "B". The button B7 is provided for the operator to instruct that the content of the guide image SC4 is confirmed. Hereinafter, the button B7 is referred to as a "confirmation" button B7.

The guide image SC4 may be displayed on the touch panel 11f for customer rather than the touch panel 11f for store clerk. In this case, a user (customer) who confirms the guide image SC touches the "confirmation" button B7.

After the sales of the commodity purchased by the shopper is completely registered, the store clerk 21 touches the "confirmation" button B7 if the store clerk 21 confirms the guide image SC4. The store clerk 21 notifies the shopper 22 that the settlement has to be made by the settlement apparatus 12 designated with the guide image SC4. After receiving this notification, the shopper 22 moves to the settlement apparatus 12, and performs an operation for the settlement. On the other hand, at the time of the training mode, if the trainee who completely registers the sales of the commodities for training confirms the guide image SC4, the trainee touches the "confirmation" button B7. Thereafter, the trainee moves to the settlement apparatus 12 designated with the guide image SC4, and is trained to learn the input operation on the settlement apparatus.

In Act 31, the CPU 11 a displaying the guide image SC4 on the touch panel 11f waits for the "confirmation" button B7 to be touched. If the "confirmation" button B7 is touched (YES in Act 31), the CPU 11 a sets the status information ST1 in the status memory 44 to "0" in Act 32. Thereafter, the CPU 11 a returns to the processing in Act 2. Therefore, the CPU 11 a resets the image displayed on the touch panel 11f from the guide image SC4 to the first registration detail image SC1. The CPU 11 a repeats the processing the same as that described above.

On the other hand, if the response signal indicates error (NO in Act 28), the CPU 11 a displays a transmission failure image on an area of the screen of the touch panel 11f. The transmission failure image informs the operator that the settlement data is not received by the settlement apparatus 12 and thus the settlement cannot performed on the settlement apparatus 12. The transmission failure image includes the "confirmation" button B7 similar to the guide image SC4. The store clerk 21 or the trainee who confirms the non-transmittable image touches the "confirmation" button B7.

The CPU 11 a displaying the transmission failure image proceeds to the processing in Act 31 described above. Therefore, if the "confirmation" button B7 in the transmission failure image is touched, the image displayed on the touch panel 11f is changed from the transmission failure image to the first registration detail image SC1.

The computer including the CPU 11a performs the processing in Act 31 and Act 32 to realize a resetting unit for resetting the operation mode of the registration apparatus to the default mode after the transmission unit transmits the settlement data in the non-default mode.

As described above, the registration apparatus 11 can change the operation mode from the registration mode (default mode) to the training mode (non-default mode) by touching the "training" button B1 on the first registration detail image SC1. If the trainee completes the training for a series of input operations relating to a single transaction, the operation mode of the registration apparatus 11 is reset to the registration mode. Therefore, if the trainee performs training again to learn the operation of the registration apparatus 11, the trainee touches only the "training" button B1 on the first registration detail image SC1.

Next, an operation of the settlement apparatus 12 is described.

If the settlement apparatus 12 is activated, the CPU 12a starts a main processing illustrated in a flowchart in FIG. 7. First, the CPU 12a resets the in-process flag F in the flag memory 52 to "0" in Act 41. In Act 42, the CPU 12a displays a standby image on an area of the screen on the touch panel 12f. The standby image represents that the settlement apparatus 12 is not in a state in which the settlement processing is performed. The standby image may arbitrarily represent any kind of information. For example, the standby image may display a message indicating that the settlement processing cannot be performed, an image serving as a screen saver on which an advertisement is displayed, and the like.

The CPU 12a can perform the reception interruption processing illustrated in FIG. 8 in parallel with the main processing illustrated in FIG. 7. The reception interruption processing starts if the communication unit 12i receives information the transmission destination address of which is set to the communication address of the apparatus including the CPU 12a. If the reception interruption processing starts, the CPU 12a first determines whether or not the received information includes the settlement data in Act 61. The received information includes a category code indicating a category of information. The CPU 12a identifies whether or not the received information includes the settlement data in accordance with the category code. If the received information does not include the settlement data (NO in Act 61), the CPU 12a performs the information processing in accordance with the category of the received information.

If the received information includes the settlement data (YES in Act 61), the CPU 12a examines the in-process flag F in Act 62. At this moment, if the in-process flag F is reset to "0" (NO in Act 62), in other words, if the settlement processing is not performed in the settlement apparatus 12, the CPU 12a notifies the main processing that the settlement data is received in Act 63.

The computer including the CPU 12a performs the processing in Act 61 to Act 63 in cooperation with the communication unit 12i to realize a reception unit for receiving the settlement data transmitted via the network (LAN 13).

On the other hand, if the in-process flag F is set to "1" (YES in Act 62), in other words, if the settlement processing is being performed in the settlement apparatus 12, the CPU 12a confirms whether or not the transmission destination ID is stored in the transmission destination memory 53 in Act 64. If the transmission destination ID is not stored in the transmission destination memory 53 (NO in Act 64), the CPU 12a transmits the response signal for error to the registration apparatus 11, i.e., the accounting data transmission source in Act 65.

Specifically, the CPU 12a sets the communication address set as the transmission source address in the received information to the transmission destination address and the communication address assigned to the apparatus including the CPU 12a to the transmission source address, and then controls the communication unit 12i to transmit the response signal for error to the LAN 13. With this control, the response signal for error is transmitted to the LAN 13. The response signal for error is received by the registration apparatus 11 specified with the transmission destination address.

On the other hand, if the transmission destination ID is stored in the transmission destination memory 53 (YES in Act 64), the CPU 12a acquires the transmission destination ID from the transmission destination memory 53 in Act 66. The CPU 12a then transmits the information received through the processing in Act 61, i.e., information including the settlement data to which the status information ST1 is added, to the other one settlement apparatus 12 identified with the transmission destination ID in Act 67.

Specifically, the CPU 12a changes the transmission destination address of the information received through the processing in Act 61 to the communication address set in the one settlement apparatus 12 identified the transmission destination ID, and controls the communication unit 12i to transmit the changed communication address to the LAN 13. With this control, information including the settlement data to which the status information ST1 is added is transmitted onto the LAN 13. This information is received by one of the settlement apparatuses 12 identified with the transmission destination ID. The CPU 12a of the settlement apparatus 12 receiving this information executes the reception interruption processing illustrated in a flowchart in FIG. 8.

Even if the in-process flag F is reset to "0" in the processing in Act 62, the CPU 12a proceeds to the processing in Act 64 instead of Act 63 if an error, in which the settlement processing is interrupted, for example, consumption of the receipt paper in the printer 12g, occurs.

Referring back to FIG. 7, the description is continued.

After displaying the standby image in an area of the screen on the touch panel 12f, the CPU 12a waits for reception of the settlement data in Act 43. If the notification that the settlement data is received through the processing in Act 63 in which the reception interruption processing is executed is received, the CPU 12a stores the settlement data to which the status information ST1 is added in the settlement data memory 51 in Act 44. In Act 45, the CPU 12a sets the in-process flag F to "1". In Act 46, the CPU 12a transmits a response signal for reception to the registration apparatus 11, i.e., the settlement data transmission source.

Specifically, the CPU 12a sets the communication address set as the transmission source address in the received information to the transmission destination address and the communication address assigned to the apparatus including the CPU 12a to the transmission source address and controls the communication unit 12i to transmit the response signal for reception to the LAN 13. With this control, the response signal for reception is transmitted to the LAN 13. The response signal for reception is received by the registration apparatus 11 specified with the transmission destination address.

In this way, the CPU 12a controlling the transmission of the response signal for reception detects the status information ST1 added to the settlement data in Act 47. Then, the CPU 12a replaces the status information ST2 stored in the status memory 54 with the status information ST1 detected through the processing in Act 47 in Act 48. Therefore, if the status information ST1 added to the settlement data is set to "0", the status information ST2 is set to "0". In other words, the operation mode of the settlement apparatus 12 is set to the registration mode. Similarly, if the status information ST1 added to the settlement data is set to "9", the status information ST2 is set to "9". That is, the operation mode of the settlement apparatus 12 is set to the training mode.

The computer including the CPU 12a performs the processing in Act 47 and Act 48, to realize a setting unit for setting the operation mode of the settlement apparatus 12 to the same mode as the registration apparatus 11, i.e., the accounting data transmission source based on the status information ST1 added to the settlement data received by the reception unit.

After replacing the status information ST2 with the status information ST1, the CPU 12a displays a payment method selection image SC5 on an area of the screen the touch panel 12f in Act 49.

The payment method selection image SC5 is provided to show payment methods (mediums) selected by the operator (payer or person for settlement (in general, shopper 22) or trainee). An example of the payment method selection image SC5 is illustrated in FIG. 13. FIG. 13 is a view illustrating the payment method selection image if the status information ST2 is set to "9", that is, the settlement apparatus 12 is operated in the training mode. The payment method selection image at the time the status information ST2 is set to "0", that is, the settlement apparatus 12 is operated in the registration mode, is realized in such a manner that the comment (in the training mode) notifying the trainee of the training mode is deleted from the payment method selection image SC5 in FIG. 13.

The payment method selection image SC5 includes display areas R6 and R7, and buttons B8, B9, and B10. In the display area R6, an operation guidance to the operator is displayed. In the display area R7, the total number of quantities and the total amount included in the settlement data are displayed. The button B8 is provided for the operator to designate cash as the payment medium. The button B9 is provided for the operator to designate the credit card as the payment medium. The button B10 is provided for the operator to designate the electronic money as the payment medium. In the following description, the button B8 is referred to as a "cash" button B8, the button B9 is referred to as a "credit" button B9, and the button B10 is referred to as an "electronic money" button B10.

The operator, i.e., person for settlement who confirms the payment method selection image at the time of the registration mode determines the payment method such as cash, credit card, or electronic money. If the payment is made in cash, the operator touches the "cash" button B8, and puts bills and coins into the automatic change machine 12k as much as or more than the total amount. If the payment is made with the credit card, the operator touches the "credit" button B9, and then the reader/writer 12h reads data of the credit card. If the payment is made with the electronic money, the operator touches the "electronic money" button B10, and then the reader/writer 12h reads money data stored in the IC chip of the IC card or the information communication terminal.

Similarly, the operator, i.e., the trainee who confirms the payment method selection image SC5 at the time of the training mode, touches the "cash" button B8 if the trainee is trained to learn paying in cash. If the trainee is trained to learn paying with the credit card, the trainee touches the "credit" button B9. If the trainee is trained to learn paying with the electronic money, the trainee touches the "electronic money" button B10. However, it is not required by the trainee to perform an actual payment method. in this regards, it is described later.

Referring back to FIG. 7, the description is continued.

After displaying the payment method selection image SC5, the CPU 12a receives the selection of the payment medium in Act 50. The CPU 12a waits for operation on the "cash" button B6, the "credit" button B7, or the "electronic money" button B8. If one of the buttons is touched, the CPU 12a detects the payment medium selected by the touched button in Act 51. For example, if the "cash" button B6 is touched, the CPU 12a determines that cash is selected as the payment medium and detects the amount of cash put into the automatic change machine 12k. Similarly, if the "credit" button B7 is touched, the CPU 12a determines that credit card is selected as the payment medium and detects the credit card data read by the reader/writer 12h from the credit card. If the "electronic money" button B8 is touched, the CPU 12a determines that the electronic money card is selected as the payment medium and detects the electronic money data read by the reader/writer 12h from the electronic money card. Thereafter, the CPU 12a displays a settlement image (refer to FIG. 14) SC6 corresponding to the selected payment medium on an area of the screen on the touch panel 12f in Act 52.

The settlement image SC 6 is provided to notify the operator of a settlement method (medium). An example of the settlement image SC6 is illustrated in FIG. 14. FIG. 14 is a view illustrating the settlement image SC6 at the time the cash payment is selected as the payment medium. The settlement image SC6 includes display areas R8 and R9, and a button B11. In the display area R8, operation guidance for the cash payment is displayed. In the display area R9, payment information relating to the cash payment, e.g., the total amount (settlement amount), the payment amount, and the change amount, is displayed. The button B11 is provided for the operator who pays the settlement amount in cash to instruct payment adjustment. In the following description, the button B11 is referred to as a "payment adjustment" button B11.

In the settlement image at the time the credit card payment is selected as the payment medium, for example, the operation guidance for reading the credit card by the reader/writer 12h is displayed in the display area R8. The total amount and the credit payment amount are displayed in the display area R9. In the settlement image at the time the electronic money payment is selected as the payment medium, for example, the operation guidance for reading the electronic money by the reader/writer 12h is displayed in the display area R8. The total amount and the electronic money balance are displayed in the display area R9.

Referring back to FIG. 7, the description is continued.

After displaying the settlement image SC6, the CPU 12a examines the status information ST2 of the status memory 54 in Act 53. If the status information ST2 is set to "0", that is, the registration mode is set ("0" in Act 53), the CPU 12a performs the settlement processing in Act 54. If the "cash" button B6 is touched, the CPU 12a performs the settlement processing for the cash payment based on the deposited cash amount detected via the automatic change machine 12k. If the "credit" button B7 is touched, the CPU 12a performs the settlement processing for the credit card payment based on the credit card data read by the reader/writer 12h. If the electronic money button B8 is touched, the CPU 12a performs the settlement processing for the electronic money payment based on the balance of the electronic money read by the reader/writer 12h. The settlement processing is the well-known procedure in the existing self-checkout POS terminal. Accordingly, the description is omitted herein.

The settlement method is not limited to cash, the credit card, and the electronic money. For example, the settlement apparatus 12 can deal with settlement with cash vouchers such as service points and gift certificates.

If the settlement processing is completed, the CPU 12a performs receipt issuing processing in Act 55. The CPU 12a edits print data for a receipt based on the settlement data stored in the settlement data memory 51. The CPU 12a operates the printer 12g to issue the receipt. After the receipt is issued, the CPU 12a notifies the server 14 of the sales amount indicated with the settlement data in Act 56.

Specifically, the CPU 12a generates a sales amount notification command including the settlement data stored in the settlement data memory 51. The CPU 12a sets the communication address of the server 14 as the transmission destination address and the communication address assigned to the apparatus including the CPU 12a as the transmission source address, and controls the communication unit 12i to transmit the sales amount notification command to the LAN 13. With this control, the sales amount notification command is transmitted to the LAN 13. The sales amount notification command is received by the server 14 specified with the transmission destination address.

After receiving the sales amount notification command, the server 14 updates the data in a total sales data file 31 based on the settlement data included in the command.

After notifying the server 14 of the sales amount indicated with the settlement data, the CPU 12a returns to the processing in Act 41. The CPU 12a repeats the subsequent processing in the same manner as described above.

On the other hand, if the status information ST2 is set to "9" in Act 53, that is, the training mode is set, the CPU 12a displays a virtual payment image SC7 on an area of the screen on the touch panel 12f in Act 57.

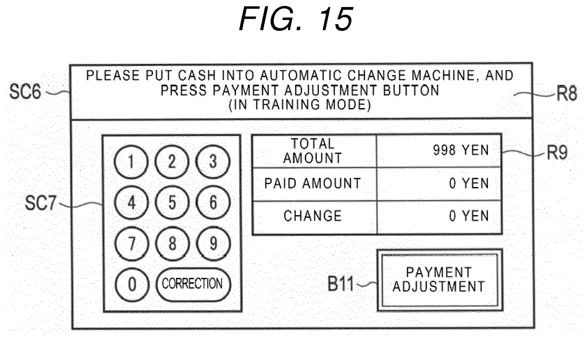

The virtual payment image SC7 is provided for the trainee to virtually perform a payment operation with the selected payment medium. An example of the virtual payment image SC7 is illustrated in FIG. 15. FIG. 15 is a view illustrating the virtual payment image SC7 at the time the cash payment is selected as the payment medium. The virtual payment image SC7 includes 0 to 9 ten-key buttons for numerically registering the payment amount (deposited amount), and a "correction" button for a person for settlement to instruct the correction of the numerical values registered. As illustrated in FIG. 15, the virtual payment image SC7 is displayed in such a manner that it is superimposed on the settlement image SC6. After confirming the virtual payment image SC7, the trainee numerically registers the deposited amount by using the ten-key buttons instead of putting the cash into the automatic change machine 12k. Alternatively, cash may be actually put into the automatic change machine 12k.

The virtual payment image at the time the credit card payment is selected as the payment medium is provided to perform operation for reading the credit card data by the reader/writer 12h on the screen. After confirming the image, the trainee perform the operation for reading the credit card data by the reader/writer 12h on the screen of the touch panel 11f. Alternatively, the trainee may perform the operation to actually read the credit card data by the reader/writer 12h. Similarly, the virtual payment image at the time the electronic money payment is selected as the payment medium is provided to read the electronic money by the reader/writer 12h on the screen. After confirming the image, the trainee performs the operation for reading the electronic money by the reader/writer 12h on the screen of the touch panel 11f. Alternatively, the trainee may perform the operation to actually read the electronic money by the reader/writer 12h.

Referring back to FIG. 7, the description is continued.

After displaying the virtual payment image SC7, the CPU 12a performs the settlement processing in Act 58. The settlement processing is basically the same as the settlement processing in Act 54. However, in the settlement processing in Act 58, the operation input on the virtual payment image SC7 is valid. If the "cash" button B6 is touched, the CPU 12a performs the settlement processing on the assumption that a value numerically registered by the operation input on the virtual payment image SC7 is set as the deposited amount input into the automatic change machine 12k. If the "credit" button B7 is touched, the CPU 12a executes the settlement processing on the assumption that the preset credit card data is read by the reader/writer 12h by the input operation on the virtual payment image SC7. If the "electronic money" button B8 is touched, the CPU 12a executes the settlement processing on the assumption that the preset balance of the electronic money is read by the reader/writer 12h by the input operation on the virtual payment image SC7.

If the settlement processing is completed, the CPU 12a performs a receipt issuing processing in Act 59. The receipt issuing processing is the same as the receipt issuing processing in Act 55.

If the receipt issuing processing is completed, the CPU 12a returns to the processing in Act 41. The CPU 12a repeats the subsequent processing in the same manner as described above. In this way, if the status information ST2 is set to "9", that is, the operation mode is set to the training mode, the settlement apparatus 12 performs the settlement processing and the receipt issuing processing. However, the settlement apparatus 12 does not perform the sales amount notification processing of the settlement data described in Act 56.

The computer including the CPU 12a performs the processing in Act 51 to Act 59, to realize a settlement unit for performing the settlement processing of the settlement data in accordance with the operation mode set by the setting unit.

In the checkout system 10 according to the embodiment described above, the training for the commodity sales registration operation is performed on the registration apparatus 11 whose operation mode is set to the training mode and if the settlement data generated in the training is transmitted to the settlement apparatus 12, the operation mode of the settlement apparatus 12 is automatically switched to the training mode. The settlement apparatus 12 enables the training for settlement work.

Therefore, the trainee does not have to perform a declaration operation for setting the operation mode to the training mode for each of the registration apparatus and the settlement apparatus. Therefore, the trainee no longer has inconvenience caused by the troublesome operations.

In the embodiment described above, if the training for a series of input operations relating to one transaction is completed in the registration apparatus 11 operated in the training mode (non-default mode), the operation mode of the registration apparatus 11 is reset to the registration mode (default mode). If the settlement data generated in the registration mode in the registration apparatus 11 is transmitted to the settlement apparatus 12, the settlement apparatus 12 is operated in the registration mode. Therefore, it is not required for the trainee to perform an operation of declaring the operation completion in the training mode for each of the registration apparatus and the settlement apparatus.

### (Second Embodiment)

In the first embodiment, if the trainee completes the training for a series of input operations relating to a one transaction, the operation mode of the registration apparatus 11 is reset to the registration mode. Therefore, if the trainee wants to perform the training continuously, the trainee has to touch the "training" button B1 again. Further, if the trainee repeatedly performs the training, the trainee has to touch the "training" button B1 whenever he or she begins the training and thus the repeated operations on the "training" button are troublesome. Hereinafter, a second embodiment is described which can solve such troublesome operation.

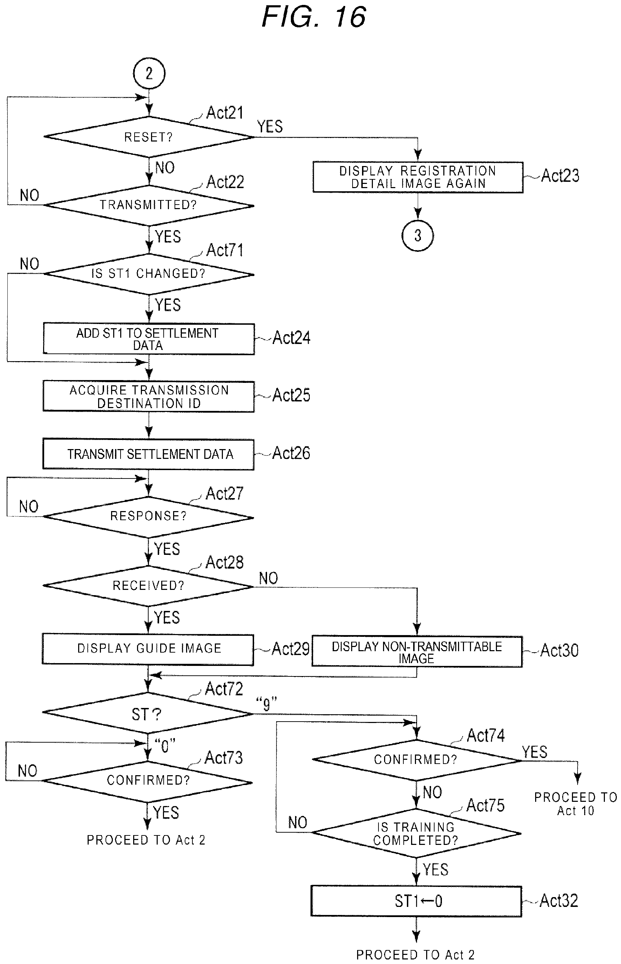

In FIGS. 1 to 15 described according to the first embodiment, the drawings common to those according to the second embodiment (FIGS. 1 to 5, FIGS. 8 to 11, and FIGS. 13 to 15) are employed without any change. In FIGS. 16 to 18 to be described according to the second embodiment, the same reference numerals applied to elements common to those according to the first embodiment, and thus a detailed description thereof is not repeated.

FIG. 16 is a flowchart illustrating a procedure subsequent to the processing in Act 15 in FIG. 5 in the information processing performed by the CPU 11 a of the registration apparatus 11. After the processing in Act 15 is executed, the CPU 11 a is in a standby state in Act 21 and Act 22. In the standby state, if the "transmission" button B6 is touched (YES in Act 22), the CPU 11 a confirms whether or not the status information ST1 stored in the status memory 44 is changed from the previous information processing in Act 71.

For example, if the status information is set to "9" in Act 9 and the status information is set to "0" in Act 32, the CPU 11 a sets a change flag of 1 bit stored in a RAM 11c to "1". The CPU 11a examines the change flag in Act 71. If the change flag is set to "1", the CPU 11a determines that the status information ST1 is changed.

If the CPU 11a determines that the status information ST1 is changed (YES in Act 71), the CPU 11a adds the changed status information ST1 to the settlement data generated through the processing in Act 14 in Act 24. In this case, the CPU 11a resets the change flag to "0".

On the other hand, if the CPU 11 a determines that the change flag is not set to "1" and the status information ST 1 is not changed (NO in Act 71), the CPU 11a does not perform the processing in Act 24. Therefore, the change flag is being reset to "0".

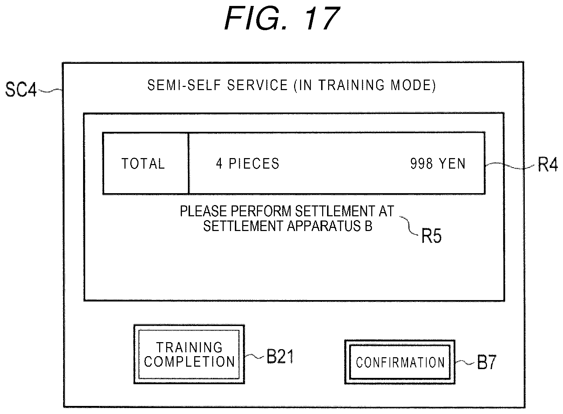

Thereafter, the CPU 11a performs the processing in Act 25 to Act 30 described above. However, if the operation mode is the training mode, a "training completion" button B21 is added to the guide image SC4 displayed on the touch panel 11f in Act 29, as illustrated in FIG. 17. Similarly, the "training completion" button B21 is also added to the non-transmittable image displayed in Act 30. The "training completion" button B21 is provided for the trainee to instruct that the operation mode of the registration apparatus 11 is switched from the training mode to the registration mode. The guide image SC4 and the non-transmittable image in the registration mode are the same as those in the first embodiment.

After displaying the guide image or the non-transmittable image, the CPU 11 a examines the status information ST2 in Act 72. If the status information ST2 is set to "0" ("0" in Act 72), the CPU 11 a waits for the operation on the "confirmation" button B7 in Act 73. If the "confirmation" button B7 is touched (YES in Act 73), the CPU 11 a returns to the processing in Act 2 in FIG. 5.

On the other hand, if the status information ST1 is set to "9" ("9" in Act 72), the CPU 11 a confirms whether or not the "confirmation" button B8 is touched in Act 74. If the "confirmation" button B4 is not touched (NO in Act 74), the CPU 11 a confirms whether or not the "training completion" button B21 is touched. If the "training completion" button B21 is not touched (NO in Act 75), the CPU 11 a returns to the processing in Act 74. Therefore, the CPU 11 a waits for the operation on the "confirmation" button B7 or the "training completion" button B21 through the processing in Act 74 and Act 75.

In the standby state in Act 74 and Act 75, if the "confirmation" button B7 is touched (YES in Act 74), the CPU 11 a returns to the processing in Act 10 in FIG. 5.

In the standby state in Act 74 and Act 75, if the "training completion" button B21 is touched (YES in Act 75), the CPU 11 a sets the status information ST1 to "0" in Act 32. Thereafter, the CPU 11 a returns to the processing in Act 2.

The computer including the CPU 11 a performs the p processing in Act 75 and Act 76 in cooperation with the touch panel 11f to realize a second instruction unit for changing the operation mode of the registration apparatus 11 from the non-default mode to the default mode. The instruction unit described in the first embodiment functions as a first instruction unit in the second embodiment.

In the registration mode, if the store clerk 21, i.e., operator, of the registration apparatus 11 confirms the guide image SC4 or the non-transmittable image, the store clerk 21 touches the "confirmation" button B7. Then, the image displayed on the touch panel 11f is changed from the guide image SC4 or the non-transmittable image to the registration detail image SC1 displayed at the time the registration mode is selected.

On the other hand, in the training mode, if the trainee, i.e., operator, of the registration apparatus 11 confirms the guide image SC4 or the non-transmittable image, the trainee further determines whether or not to continue the training. If the trainee wants to continue the training, the trainee touches the "confirmation" button B7. Then, the image displayed on the touch panel 11f is changed from the guide image SC4 or the non-transmittable image to the registration detail image SC1 displayed at the time the training mode is selected. Therefore, it is not required to the trainee to operate the "training" button B1 every time the training is continuously performed.

If the trainee completes the training, the trainee touches the "training completion" button B21. Then, the image displayed on the touch panel 11f is changed from the guide image SC4 or the non-transmittable image to the registration detail image SC1 displayed at the time the registration mode is selected.

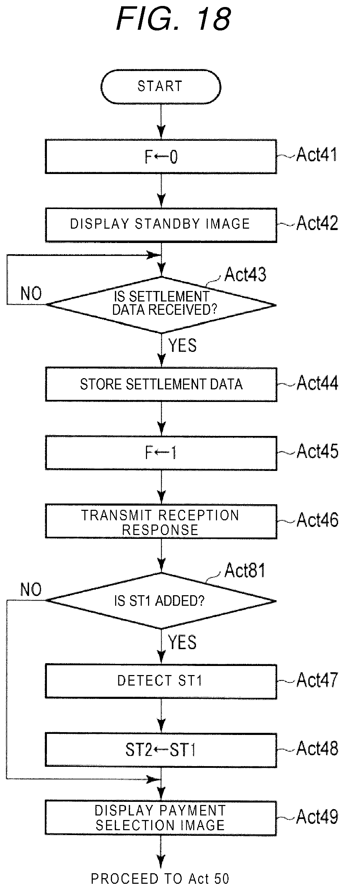

FIG. 18 is a flowchart illustrating procedure in processing in Act 41 to Act 49 of the main processing performed by the CPU 12a of the settlement apparatus 12 according to the second embodiment. The processing subsequent to that in Act 50 are the same as those in the first embodiment, and thus, the description is omitted hereafter.

If the settlement apparatus 12 is activated, the CPU 12a starts the main processing illustrated in the flowchart in FIG. 18. The CPU 12a performs the processing in Act 41 to Act 46, similarly to the first embodiment. In Act 46, the CPU 12a transmits the response signal for reception to the registration apparatus 11, i.e., the settlement data transmission source and thereafter confirms whether or not the status information is added to the settlement data in Act 81.

As described in Act 71 and Act 24 in FIG. 16, if the status information ST1 stored in the status memory 44 is changed, the status information is added to the settlement data. However, if the status information ST1 is not changed, the status information is not added to the settlement data.

If the status information is added to the settlement data (YES in Act 81), the CPU 12a performs the processing in Act 47 and Act 48 described in the first embodiment. The CPU 12a detects the status information ST1 added to the settlement data, and replaces the status information ST2 stored in the status memory 54 with the detected status information ST1.

On the other hand, if the status information is not added to the settlement data (NO in Act 81), the CPU 12a does not perform the processing in Act 47 and Act 48. Thereafter, the CPU 12a displays the payment selection image SC5 on an area of the screen on the touch panel 12f in Act 49. The processing subsequent to that in Act 50 described in the first embodiment are performed.

In the registration apparatus 11, if the status information ST1 is changed from "0" to "9", for example, that is, the operation mode is switched from the registration mode to the training mode, the status information of "9" is added to the settlement data originally transmitted from the registration apparatus 11 to the settlement apparatus 12. Therefore, in the settlement apparatus 12 receiving the settlement data to which the status information ST1 is added, the status information ST2 is set to "9", that is, the operation mode becomes the training mode. A state of the training mode is maintained until the settlement data to which the status information ST1 is added is subsequently transmitted from the registration settlement 11. While being in the state, every time the settlement data to which the status information ST1 is not added is transmitted from the registration apparatus 11, the settlement apparatus 12 performs the processing in Act 49 to Act 52 and Act 56 to Act 58 described in the first embodiment.

On the other hand, in the registration apparatus 11, if the status information ST1 is changed from "9" to "0", that is, the operation mode is switched from the training mode to the registration mode, the status information of "0" is added to the apparatus data originally transmitted from the registration apparatus 11 to the settlement apparatus 12. Therefore, in the settlement apparatus 12 receiving the settlement data to which the status information ST1 is added, the status information ST2 is set to "0", that is, the operation mode becomes the registration mode. A state of the registration mode is maintained until the settlement data to which the status information ST1 is added is subsequently transmitted from the registration apparatus 11. While being in the state, every time the settlement data to which the status information ST1 is not added is transmitted from the registration apparatus 11, the settlement apparatus 12 performs the processing in Act 49 to Act 55 described in the first embodiment.

As described above, according to the second embodiment, the trainee touches the "training" button B1 if the trainee starts the training, and touches the "training completion" button B21 if the trainee terminates the training. Until the "training completion" button is touched, the training mode is maintained and thus the trainee can repeatedly perform the training without operating the "training button" B1 again. Accordingly, the operation of repeatedly restarting the training in the second embodiment can be simplified compared with that in the first embodiment.

According to the second embodiment, the registration apparatus 11 adds the status information ST1 to the settlement data only if the status information ST1 is changed. Therefore, compared to the first embodiment in which the status information ST1 is added to all settlement data, the processing load of the CPU 11 a in the second embodiment can be advantageously reduced.

Hereinafter, modification of the present embodiment is described.

In the above-described embodiments, the training mode is described as an example of the non-default operation mode of the registration apparatus 11 and the settlement apparatus 12. The non-default operation mode is not limited only to the training mode. The non-default operation mode may include, for example, a mode for transmitting a settlement data to the settlement apparatus in an operation mode other than the registration mode. One of the operation modes is a commodity-return mode. For example, if the store clerk 21 receives a commodity-return request from a shopper who completes a transaction, the store clerk 21 sets the operation mode of the registration apparatus 11 to the commodity-return mode. The store clerk 21 registers a commodity-return data of the returned commodity in the registration apparatus 11. The registration apparatus 11 transmits the settlement data including the commodity-return data registered to the settlement apparatus 12. In this case, the registration apparatus 11 adds the status information indicating the commodity-return mode to the settlement data. The settlement apparatus 12 receiving the settlement data including the status information is operated in the commodity-return mode. In the commodity-return mode, for example, the settlement apparatus 12 refunds an amount of money corresponding to the price of the commodity returned and the like to the shopper through the automatic change machine 12k.

The registration apparatus 11 or the settlement apparatus 12 is generally transferred in a state in which a program such as a control program is stored in a ROM. However, the invention is not limited thereto. The registration apparatus 11 or the settlement apparatus 12 may be transferred in a state in which the program is not stored in the ROM or in a state in which another control program is stored in the ROM or an auxiliary memory unit. In this case, a control program transferred separately from the registration apparatus 11 or the settlement apparatus 12 may be written on a writable storage device included in the registration apparatus 11 or the settlement apparatus 12 with a user's operation. Alternatively, another control program other than the above-described control program may be rewritten. The control program can be transferred by being recorded in a removable recording medium, or by means of communication via a network. The recording medium may employ any form such as a CD-ROM and a memory card as long as the recording medium can store the program and can be read by the registration apparatus 11 or the settlement apparatus 12. With regard to a function achieved by installing or downloading the program, the function may be realized in cooperation with an operating system (OS) installed inside the apparatus.

While certain embodiments have been described, these embodiments have been presented by way of example only, and are not intended to limit the scope of the invention. Indeed, the novel methods and systems described herein may be embodied in a variety of other forms; furthermore, various omissions, substitutions and changes in the form of the methods and systems described herein may be made without departing from the framework of the invention. The accompanying claims and their equivalents are intended to cover such forms or modifications as would fall within the scope of the invention.

## Claims

1. A checkout system comprising a registration apparatus and a settlement apparatus connected to the registration apparatus through a network,
the registration apparatus comprising:
a generation module configured to generate a settlement data required for a transaction settlement,
an adding module configured to add information for specifying an operation mode of the registration apparatus to the settlement data generated by the generation module, and
a transmission module configured to transmit the settlement data, to which the information for specifying the operation mode is added, to the network; and
the settlement apparatus comprising:
a reception module configured to receive the settlement data transmitted through the network,
a setting module configured to set the operation mode of the settlement apparatus to the same operation mode as the registration apparatus based on the information added to the settlement data received by the reception module, and
a settlement module configured to perform a settlement processing according to the settlement data in the operation mode set by the setting module.

2. The system according to claim 1, wherein the registration apparatus further comprises an instruction module configured to instruct changing the operation mode of the registration apparatus from a default mode to a non-default mode, and a resetting module configured to reset the operation mode of the registration apparatus to the default mode after the transmission module transmits the settlement data in the non-default mode to the settlement apparatus.

3. The system according to claim 1 or 2, wherein the registration apparatus further comprises a first instruction module configured to instruct changing the operation mode of the registration apparatus from a default mode to a non-default mode, and a second instruction module configured to instruct changing the operation mode of the registration apparatus from the non-default mode to the default mode,
wherein each time the operation mode is changed, the adding module adds information for specifying the changed operation mode to the settlement data generated by the generation module.

4. The system according to claim 3, wherein the non-default mode is a training mode in which a user learns an input operation on the registration apparatus.

5. The system according to any one of claims 1 to 4 further comprising:
a resetting module configured to reset the operation mode of the settlement apparatus to a default mode after the settlement module performs the settlement processing.

6. A method for setting an operation mode of a settlement apparatus connected to a registration apparatus through a network in a checkout system, comprising:
generating a settlement data required for a transaction settlement in the registration apparatus;
adding information for indicating an operation mode of the registration apparatus to the settlement data;
transmitting the settlement data to which the information for indicating the operation mode is added from the registration apparatus to the network;
receiving the settlement data transmitted through the network by the settlement apparatus;
setting the operation mode of the settlement apparatus to the same operation mode as the registration apparatus based on the information added to the settlement data; and
performing a settlement processing according to the settlement data in the set operation mode.

7. The method according to claim 6, further comprising:
changing the operation mode of the registration apparatus from a default mode to a non-default mode, and
resetting the operation mode of the registration apparatus to the default mode after transmitting the settlement data in the non-default mode to the settlement apparatus.

8. The method according to claim 6 or 7, further comprising:
changing the operation mode of the registration apparatus from a default mode to a non-default mode,
changing the operation mode of the registration apparatus from the non-default mode to the default mode, and
each time the operation mode is changed, adding information for specifying the changed operation mode to the settlement data generated.

9. The method according to claim 8, wherein the non-default mode is a training mode in which a user learns an input operation on the registration apparatus.

10. The method according to any one of claims 6 to 9 further comprising:
resetting the operation mode of the settlement apparatus to a default mode after performing settlement processing.

11. The method according to any one of claims 8 to 10, wherein the default mode is an operation mode.

12. A registration apparatus which connects, through a network, with a settlement apparatus according to any one of claims 1 to 5, for performing settlement processing according to a settlement data in a checkout system, comprising:
a generation module configured to generate the settlement data required for a transaction settlement;
an adding module configured to add information for specifying an operation mode of the registration apparatus to the settlement data generated by the generation module; and
a transmission module configured to transmit the settlement data to which the information for specifying the operation mode is added by the adding module to the network.

13. The device according to claim 12, further comprising:
a first instruction module configured to instruct changing the operation mode of the registration apparatus from a default mode to a non-default mode; and
a second instruction module configured to instruct changing the operation mode of the registration apparatus from the non-default mode to the default mode,
wherein each time the operation mode is changed, the adding module adds information for specifying the changed operation mode to the settlement data generated by the generation module.

14. A settlement apparatus which connects, through a network, with a registration apparatus according to claim 12 or 13 for transmitting, to the network, a settlement data, required for a transaction settlement, to which information for specifying an operation mode thereof is added, in a checkout system, comprising:
a reception module configured to receive the settlement data transmitted through the network;
a setting module configured to set the operation mode of the settlement apparatus to the same operation mode as the registration apparatus based on the information added to the settlement data received by the reception module; and
a settlement module configured to perform settlement processing according to the settlement data in the operation mode set by the setting module.

15. The device according to claim 14 further comprising:
a resetting module configured to reset the operation mode of the settlement apparatus to a default mode after the settlement module performs the settlement processing.
